# EUROPEAN PATENT SPECIFICATION

(11) **EP 2 261 268 B1**
(45) Date of publication and mention of the grant of the patent: **29.04.2020**
(21) Application number: 10182079.3
(22) Date of filing: 18.08.2004
(51) Int. Cl.: C08F 110/02, C08F 2/34, C08F 4/649

(54) **ETHYLENE POLYMERIZATION USING ZIEGLER-NATTA CATALYST COMPOSITIONS**
ÄTHYLENPOLYMERISATION MITTELS ZIEGLER-NATTA-KATALYSATORZUSAMMENSETZUNGEN
POLYMERISATION DE L'ETHYLENE UTILISANT DES COMPOSITIONS CATALYTIQUES DE TYPE ZIEGLER-NATTA

(30) Priority: 23.09.2003 US 505330 P
(43) Date of publication of application: 15.12.2010
(62) Divisional of application: 04781351.4
(73) Proprietor: Dow Global Technologies LLC, Midland, MI 48674 (US)
(72) Inventor: Campbell, Richard E., Jr, Midland, MI 48642-3111 (US); Chen, Linfeng, Sugar Land, TX 77478 (US); Painter, Roger B., Rosharon, TX 77583 (US); Reib, Robert N., Hurricane, WV 25526 (US); Tilston, Michael W., Missouri City, TX 77459 (US)
(74) Representative: Beck Greener LLP

(56) References cited:
- EP-A- 0 341 723
- EP-A- 0 475 134
- WO-A-00/75203
- WO-A-97/21746
- WO-A-02/096558
- WO-A-2004/089998
- US-A- 4 520 163
- US-B1- 6 180 735
- US-B1- 6 306 658
- DATABASE CAPLUS [Online] CHEMICAL ABSTRACTS SERVICE, COLUMBUS, OHIO, US; "Fourth generation polymerization catalysts and impact-grade polypropylene manufacture using them Fourth generation polymerization catalysts and impact-grade polypropylene manufacture using them" XP002310160 retrieved from STN Database accession no. 1995:576434 & JP 6 298832 A (EASTMAN CHEMICAL CO., USA) 25 October 1994 (1994-10-25)
- SAMSON, JOB JAN C. ET AL SAMSON, JOB JAN C. ET AL: "Liquid phase and gas phase polymerization of propylene Liquid phase and gas phase polymerization of propylene" POLYOLEFINS 2000, INTERNATIONAL CONFERENCE ON POLYOLEFINS, HOUSTON, TX, UNITED STATES, FEB. 27-MAR. 1, 2000 , 333-345 PUBLISHER: SOCIETY OF PLASTICS ENGINEERS, BROOKFIELD, CONN., 2000, XP008040238

## Description

### BACKGROUND OF THE INVENTION

The present invention relates to Ziegler-Natta catalyst compositions for use in the polymerization of ethylene having improved high temperature polymerization properties. More particularly, the present invention relates to such catalyst compositions that are self-limiting or auto-extinguishing, thereby avoiding polymer agglomeration, operability problems, and/or reactor sheeting, chunking or fouling due to localized overheating or even "run-away" polymerizations.

Ziegler-Natta catalyst compositions are well known in the art. Typically, these compositions include a Group 3-10 transition metal containing procatalyst compound, especially a complex of titanium-, halide-, and, optionally magnesium- C₁₋₆ alkoxide- and/or C₆₋₁₀ aryloxide-moieties; a co-catalyst, usually an organoaluminum compound, especially a trialkylaluminum compound; and a support, preferably finely divided magnesium dichloride. Examples of suitable Group 4 metal complexes that are useful as procatalysts include TiCl₄, TiCl₃, Ti(OC₂H₅)₃Cl, Ti(OC₂H₅)₂Cl₂, Ti(OC₂H₅)₃Cl, Ti(OC₃H₇)Cl₃, Ti(OC₃H₇)₂Cl₂, Ti(OC₄H₉)Cl₃, Ti(OC₄H₉)₂Cl₂, TiCl₃·1/3AlCl₃, Ti(OC₁₂H₂₅)Cl₃, MgTi(OC₂H₅)₅Cl, MgTi(OC₂H₅)₄Cl₂, MgTi(OC₂H₅)₃Cl₃, MgTi(OC₂H₅)₂Cl₄, MgTi(OC₂H₅)Cl₅, and mixtures thereof. Additional suitable components of the Ziegler-Natta catalyst composition may include an internal electron donor, especially C₁₋₆ alkyl esters of aromatic carboxylic or dicarboxylic acids; dispersants; surfactants; diluents; inert supports such as silica or alumina; binding agents; and antistatic compounds. Examples of Ziegler-Natta catalyst compositions are shown in US-A 4,107,413; US-A-4,115,319; US-A-4,220,554; US-A-4,294,721; US-A-4,302,565; US-A-4,302,566; US-A-4,330,649; US-A-4,439,540; US-A-4,442,276; US-A-4,460,701; US-A-4,472,521; US-A-4,540,679; US-A-4,547,476; US-A-4,548,915; US-A-4,562,173; US-A-4,728,705; US-A-4,816,433; US-A-4,829,037; US-A-4,927,797; US-A-4,990,479; US-A-5,028,671; US-A-5,034,361; US-A-5,066,737; US-A-5,066,738; US-A-5,077,357; US-A-5,082,907; US-A-5,106,806; US-A-5,146,028; US-A-5,151,399; US-A-5,153,158; US-A-5,229,342; US-A-5,247,031; and US-A-5,247,032.

In a typical continuous gas phase polymerization process, fouling or sheeting can lead to the ineffective operation of various reactor components. For example, accumulation of solid polymer on the surfaces of the reactor, the distributor plate, monitoring sensors, and the recycle system can lead to difficulty in operation and an early reactor shutdown. This problem is often encountered during polymerization of ethylene/ C₄₋₈ α-olefin mixtures since the polymerization reaction is typically conducted at temperatures that are relatively close to the softening temperature or melting point of the resulting polymer.

Reasons for the occurrence of sheeting or fouling and solutions to the various process operability problems caused thereby have been addressed by many in the art. For example, US-A-4,792, 592, US-A-4,803,251, US-A-4,855,370 and US-A-5,391,657 all discuss techniques for reducing static generation, and ultimately fouling in a gas phase polymerization process by use of water, alcohols, ketones, and/or inorganic chemical additives. WO-A- 97/14721 discusses the suppression of fines for the same purpose by adding an inert hydrocarbon to the reactor. US-A-5,627,243 discusses a new type of distributor plate for use in fluidized bed gas phase reactors. WO-A-96/08520 discusses avoiding the introduction of a scavenger into the reactor. US-A-5,461,123 discusses using sound waves to reduce sheeting. US-A-5,066,736 and EP-A-0549252 discuss the introduction of an activity retarder to the reactor to reduce agglomerates. US-A-5,610,244 relates to feeding make-up monomer directly into the reactor above the bed to avoid fouling and improve polymer quality. US-A-5,126,414 discusses oligomer removal for reducing distributor plate fouling. US-A-4,012,574 discusses adding a surface-active compound, such as a perfluorocarbon group, to the reaction mixture. US-A-5,026,795, US-A-5,410,002, US-A-5,034,480, US-A-3,082,198 and EP-A-453,116 disclose the addition of various antistatic agents to the polymerization zone in the reactor to reduce fouling, among other reasons.

There are various other known methods for improving reactor operability including coating the polymerization equipment, for example, treating the walls of a reactor using chromium compounds as described in US-A-4,532,311 and US-A-4,876,320, and feeding the catalyst into particle lean regions of the reactor, as discussed in WO-A-97/46599. Other known methods of reducing fouling include injecting antifoulants or antistatic agents into the reactor; controlling the polymerization rate in the reaction zone; reconfiguring the reactor design; modifying the catalyst system by combining the catalyst components in a particular order; manipulating the ratio of the various catalyst components; prepolymerizing a portion of the monomer; and varying the contact time and/or temperature when combining the components of a catalyst composition. Examples of the foregoing techniques include: WO-A- 96/11961 (use of an antistatic agent); US-A-5,283,218 (prepolymerization); and US-A-4,942,147 and US-A-5,362,823 (addition of autoacceleration inhibitors). With respect to the latter two patents, suitable autoacceleration inhibitors were stated to be Diels-Alder adducts that decomposed at elevated temperatures thereby generating a poison for the catalyst composition, exemplified by vanadium based catalysts. In US-A- 6,180,735, the use of solid carbonyl compounds, including aromatic carboxylic acid esters (col. 18, line 57) as one component of a catalyst composition for olefin polymerization was disclosed.

While all these possible solutions might reduce the level of fouling or sheeting of a gas phase polymerization somewhat, some are expensive to employ, some require the addition of undesirable foreign materials into the reactor, some require constant monitoring by an operator and additions in amounts and at times that must be determined empirically, and some may not reduce fouling or sheeting adequately or quickly enough for commercial purposes.

Thus, it would be advantageous to have a gas-phase polymerization process capable of operating continuously with enhanced reactor operability. In particular, the industry still desires a continuously operating, gas phase, Ziegler-Natta catalyzed, olefin polymerization process having reduced fouling or sheeting tendency, and increased duration of operation.

In particular, there remains a need in the art to provide an olefin polymerization process using a Ziegler-Natta catalyst composition for the polymerization of mixtures of ethylene with one or more C₄₋₈ α-olefins, which process has improved, self-limiting or auto-extinguishing properties, resulting in effectively reduced catalytic activity and heat generation, especially at elevated reaction temperatures. Desirably, the reduction in polymerization activity is inherent in the catalyst composition and does not require monitoring and outside intervention by an operator. In addition, there remains a need in the art to provide an additive or component (polymerization control agent or PCA) for use in combination with an olefin polymerization catalyst composition that is able to result in the foregoing improved, self-limiting, polymerization process.

WO-A-02/096558 discloses inter alia gas phase olefin polymerization using a Ziegler-Natta olefin polymerization catalyst composition comprising (i) a solid procatalyst composition prepared by contacting a solid precursor composition comprising magnesium, titanium, and alkoxide moieties with a titanium halide compound and an internal electron donor in a suitable reaction medium, separating the resultant solid product from the reaction medium, and exchanging residual alkoxide functionality thereof for chloride functionality by contacting two or more times with benzoyl chloride halogenating agent under metathesis conditions; (ii) an alkylaluminum cocatalyst; and, optionally, (iii) a selectivity control agent (SCA). Reference is made to the use of an SCA when the catalyst composition is used to polymerize propylene or C₃ and higher α-olefins. Preferably, the SCA is an alkyl ester of a ring alkoxy-substituted aromatic mono- or di- carboxylic acid and is used in an amount of from 0.01 to 100, especially 0.5 to 50, mole per mole of titanium in the procatalyst. The alkylaluminum cocatalyst preferably is used in a molar ratio of aluminium to titanium of 1:1 to 150:1, especially 10:1 to 100:1. Reference is made to the copolymerization of ethylene and α-olefins but the only exemplified coopolymerization is of ethylene and propylene in which propylene is homopolymerized in a first reactor in the presence of a SCA and then copolymerized in a second reactor without additional catalyst or SCA.

EP-A-0475134 disclose a method for producing a stereospecific polyolefin in the presence of a catalyst comprising a transition metal compound and an organometallic compound, wherein a catalyst system is used which comprises: (A) a solid catalyst component prepared by reacting a homogeneous solution containing (i) at least one member selected from the group consisting of metal magnesium and a hydroxylated organic compound, and oxygen-containing organic compounds of magnesium, (ii) an oxygen-containing organic compound of aluminum and (iii) an oxygen-containing organic compound of titanium, with (iv) at least one aluminum halide compound to obtain a solid product, and further reacting to this solid product (v) an electron-donative compound and (vi) a titanium halide compound, (B) at least one member selected from the group consisting of organometallic compounds of Groups IA, IIA, IIB, IIIB and IVB of the Periodic Table, and (C) an electron-donative compound. EP-A-0475134 teaches that a highly stereospecific polymer having good configuration of particles can be obtained in good yield by its method.

WO-A-00/75203 discloses reducing the melting peak temperature of ethylene/olefin interpolymers for a given melt index and density by the presence during polymerization of at least one modifier comprising at least one Group 15 or 16 element. Catalysts include Ziegler-Natta catalysts; modifiers include numerously exemplified carboxylic acid esters; and the specified range of reactor temperatures for continuous gas phase polymerization is 30 to 120 °C. In the worked Examples ethylene and 1-hexene are copolymerized using a titanium-containing Ziegler-Natta catalyst using, as modifier, tetrahydrofuran; nitrous oxide alone or with tetrahydrofuran; acetonitrile; pyridine alone or with acetonitrile at temperatures in the range 84 to 86 °C and at modifier:titanium ratios in the range 1:1 to 4:1 (excluding any nitrous oxide present). In 2 of 33 non-worked Example, the proposed modifier is ethyl benzoate or p-ethoxy ethyl benzoate.

### SUMMARY OF THE INVENTION

The present invention provides a gas-phase polymerization process which comprises contacting ethylene with a catalyst composition comprising one or more Group 3-10 transition metal containing, Ziegler-Natta, procatalyst compounds; one or more alkylaluminum cocatalysts; and one or more polymerization control agents (PCA), selected from C₁₋₁₀ alkyl monoether derivatives of C₁₋₁₀ alkyl esters of benzoic acid, C₁₋₁₀ alkyl monoether derivatives of C₁₋₁₀ dialkyl esters of phthalic acid, and C₁₋₁₀ alkyl monoether derivatives of C₁₋₁₀ dialkyl esters of terephthalic acid, wherein the polymerization temperature is greater than 85°C and the PCA is present in a PCA:cocatalyst(s) molar ratio of 1:1 to 1:100.

The polymerization may be conducted in a single reactor or in two or more reactors connected in series or in parallel. The process is characterized by reduced sheeting or fouling, and increased duration of operation, especially at elevated polymerization temperatures. The improvement in operation is believed to be due to the presence of the polymerization control agent. It is believed, without wishing to be bound by such belief, that the method of operation involves a polymerization-suppressing reaction, between the PCA and the cocatalyst or with the procatalyst to stop polymerization reaction, especially at elevated temperatures greater than 100 °C, more preferably greater than 110 °C, thereby causing a decrease in polymerization activity. The decrease in polymerization activity results in reduced generation of heat from the exothermic polymerization reaction. Reduction in heat generation serves to control localized temperature excursions thereby preventing sheeting and chunking. At normal polymerization temperatures, the effect on catalyst activity is negligible. Therefore, use of a polymerization control agent according to the present invention does not significantly alter productivity or polymer properties.

### BRIEF DESCRIPTION OF THE DRAWING

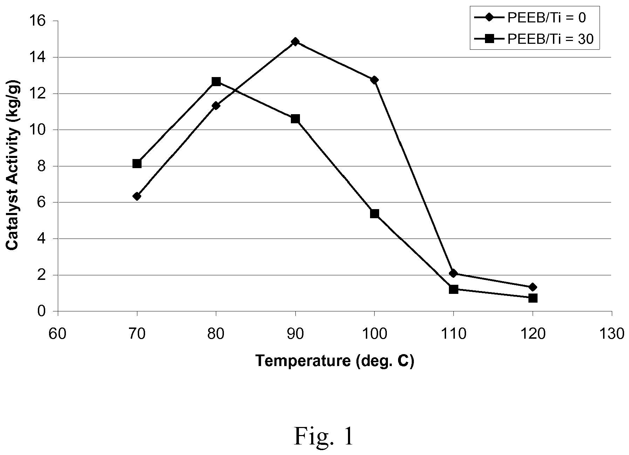

Figure 1 is a plot of the activity of the catalyst compositions of Example 1 as a function of temperature.

### DETAILED DESCRIPTION

All reference to the Periodic Table of the Elements herein shall refer to the Periodic Table of the Elements, published and copyrighted by CRC Press, Inc., 2001. Also, any reference to a Group or Groups shall be to the Group or Groups as reflected in this Periodic Table of the Elements using the IUPAC system for numbering groups.

If appearing herein, the term "comprising" and derivatives thereof is not intended to exclude the presence of any additional component, step or procedure, whether or not the same is disclosed herein. In order to avoid any doubt, all compositions claimed herein through use of the term "comprising" may include any additional additive, adjuvant, or compound, unless stated to the contrary. The term "consisting of", if used, excludes any component, step or procedure not specifically delineated or listed. The term "or", unless stated otherwise or clear from the context, refers to the listed members individually as well as in any combination. The term "inert" means the substance or substituent is substantially non-interfering with any desired reaction or result disclosed herein.

The term "mixture" when used with respect to PCA's, means the use of two or more PCA compounds simultaneously at some time during a polymerization process. The individual PCA's may be added separately to the reactor in any order and over any time interval, or premixed, or used in the form of dilute hydrocarbon solutions thereof. In addition, other components of the polymerization mixture, including the procatalyst, may be combined with one or more of the PCA's of the mixture, and optionally prepolymerized, prior to addition to the reactor.

Ziegler-Natta catalyst compositions for use herein comprise a Group 3-10 transition metal containing procatalyst compound, especially a complex of titanium-, halide-, and, optionally, magnesium-, C₁₋₆ alkoxide- and/or C₆₋₁₀ aryloxide- moieties; an alkylaluminum co-catalyst, especially a trialkylaluminum compound; and, usually, a support, preferably finely divided magnesium dichloride. Examples of suitable titanium complexes that are useful as procatalysts include: TiCl₄, TiCl₃, Ti(OC₂H₅)₃Cl, Ti(OC₂H₅)₂Cl₂, Ti(OC₂H₅)₃Cl, Ti(OC₃H₇)Cl₃, Ti(OC₃H₇)₂Cl₂, Ti(OC₄H₉)Cl₃, Ti(OC₄H₉)₂Cl₂, TiCl₃·1/3AlCl₃, Ti(OC₁₂H₂₅)Cl₃, MgTi(OC₂H₅)₅Cl₁, MgTi(OC₂H₅)₄Cl₂, MgTi(OC₂H₅)₃Cl₃, MgTi(OC₂H₅)₂Cl₄, MgTi(OC₂H₅) Cls, MgCl₂·TiCl₄, MgTiCl₆·4(CH₃C(O)OC₂H₅), MgTiCl₅(CH₃COOC₂H₅)₂, Mg₃Ti₂Cl₁₂(CH₃COOC₂H₅)₇, MgTiCl₅(C₂H₅OH)₆, MgTiCl₅(CH₃OH)₁₀, MgTiCl₅ (THF), MgTi₂Cl₁₂(C₆H₅CN)₇, Mg₃Ti₂Cl₁₂·6(C₆H₅COOC₂H₅), MgTiCl₆·2(CH₃COOC₂H₅), MgTiCl₆·6(C₅H₅N), MgTiCl₅(OCH₃)·2(CH₃COOC₂H₅), MgTiCl₅N(C₆H₅)₂ 3(CH₃COOC₂H₅), MgTiBr₂Cl₄·2((C₂H₅)₂O), MnTiCl₅·4(C₂H₅OH), Mg₃V₂Cl₁₂·7(CH₃COOC₂H₅), MgZrCl₆·4(THF), and mixtures thereof.

Additional suitable transition metal compounds include vanadium compounds such as vanadyl trihalide, vanadyl C₁₋₁₀hydrocarbyloxyhalides, and vanadyl C₁₋₁₀hydrocarbyloxides such as VOCl₃, VOCl₂(OR*), and VO(OR*)₃; vanadium tetrahalide and vanadium C₁₋₁₀hydrocarbyl oxyhalides such as VCl₄ and VCl₃(OR*); as well as vanadium- and vanadyl- acetylacetonates and chloroacetylacetonates, such as V(AcAc)₃ and VOCl₂(AcAc), where R* is C₁₋₁₀ hydrocarbyl, preferably an aliphatic, cycloaliphatic, or aromatic hydrocarbon radical, such as ethyl, n-propyl, isopropyl, n-butyl, isobutyl, tertiary-butyl, n-hexyl, cyclohexyl, phenyl, or naphthyl, and (AcAc) is acetylacetonate. Preferred vanadium catalyst compounds are VOCl₃, VCl₄, and VOCl₂(OC₄H₉).

Additional suitable transition metal compounds include chromium compounds such as CrO₃, chromocene, silyl chromate, chromyl chloride (CrO₂Cl₂), chromium-2-ethyl-hexanoate, and chromium triacetylacetonate. Examples of chromium compounds suitable for use herein are disclosed in US-A-3,709,853, US-A-3,709,954, US-A-3,231,550, US-A-3,242,099 and US-A-4,077,904.

Additional suitable components of the Ziegler-Natta catalyst composition include an internal electron donor, especially a C₁₋₆ alkyl ester of an aromatic carboxylic or dicarboxylic acid; dispersants; surfactants; diluents; inert supports; binding agents; and antistatic compounds. A preferred procatalyst is TiCl₄ supported on MgCl₂.

Polymerization control agents for use herein include C₁₋₁₀ alkyl monoether derivatives of C₁₋₁₀ alkyl esters of benzoic acid, C₁₋₁₀ alkyl monoether derivatives of C₁₋₁₀ dialkyl esters of phthalic acid, and C₁₋₁₀ alkyl monoether derivatives of C₁₋₁₀ dialkyl esters of terephthalic acid. More highly preferred PCA's include group consisting of C₁₋₄ alkyl monoether derivatives of C₁₋₄ alkyl esters of benzoic acid, C₁₋₄ alkyl monoether derivatives of C₁₋₄ dialkyl esters of phthalic acid, and C₁₋₄ alkyl monoether derivatives of C₁₋₄ dialkyl esters of terephthalic acid. A most preferred PCA is ethyl p-ethoxybenzoate (PEEB).

The benefits of the invention are obtained by operation in a procatalyst transition metal:PCA molar ratio of from 1:1 to 1:50. Suitable molar ratios of PCA:cocatalyst are from 1:1 to 1:100. The benefits of the invention are also applicable to mixtures of two or more PCA's, if desired. Generally, the PCA's become active at polymerization temperatures greater than 85 °C.

The Ziegler-Natta, transition metal catalyst composition may also include an inert support material, if desired. The support should be a particulated, inert solid that does not adversely alter the catalytic performance of the catalyst. Examples include metal oxides, such as alumina, and metalloid oxides, such as silica.

Cocatalysts for use with the foregoing transition metal, Ziegler-Natta catalyst compositions according to the invention include alkylaluminum dihalide-, trialkoxyaluminum-, dialkylaluminum halide-, and trialkylaluminum- compounds containing from 1-10 carbon atoms in each alkyl- or alkoxy- group. Preferred cocatalytsts are tri (C₁₋₄) alkylaluminum compounds, especially triethylaluminum (TEA) and triisobutylaluminum (TIBA).

One suitable method of practicing a polymerization process according to the present invention comprises performing the following steps in any order or in any combination or subcombination of individual steps:
a) providing a transition metal containing Ziegler-Natta procatalyst composition to a polymerization reactor;
b) providing an alkylaluminum cocatalyst compound to the polymerization reactor;
c) providing one or more PCA's meeting the foregoing requirements to the polymerization reactor;
d) providing a ethylene to the reactor; and
e) extracting a polymer product from the reactor.

Another suitable method of practicing a polymerization process according to the present invention comprises performing the following steps in any order or in any combination or subcombination of individual steps:
a) providing a transition metal containing Ziegler-Natta procatalyst composition comprising one or more PCA's meeting the foregoing requirements to a polymerization reactor;
b) providing an alkylaluminum cocatalyst compound to the polymerization reactor;
c) providing a ethylene to the reactor; and
d) extracting a polymer product from the reactor.

The polymerization may be conducted in a single reactor or in multiple reactors operating in parallel or in series. In a multiple reactor polymerization, at least one of the reactors is a gas-phase polymerization reactor. Suitable gas phase polymerization processes include the use of condensing mode as well as super condensing mode wherein condensed gaseous components, optionally including inert low boiling compounds (super condensing mode), are injected into the reactor in liquid form for purposes of heat removal. When multiple reactors are employed, it is desirable that they operate in series, that is, the effluent from the first reactor is desirably charged to the second reactor and additional monomer or different monomer added to continue polymerization. Additional catalyst or catalyst components (that is procatalyst, cocatalyst and PCA) may be added, if desired, to any or all of the reactors. Highly desirably, the PCA is added to only the first reactor of the series, and is effective in controlling the polymerization kinetics of at least the next reactor in the series. One or all reactors are operated at a polymerization temperature greater than 85 °C.

It is expressly intended that the foregoing disclosure of preferred, more preferred, highly preferred, or most preferred substituents, ranges, components or combinations with respect to any one of the embodiments of the invention is applicable as well to any other of the preceding or succeeding embodiments independently of the identity of any other specific substituent, range, component, or combination.

The process conditions for the invention is illustrated by the following Example that refers to a corresponding process in which ethylene is homopolymerized. Unless stated to the contrary or conventional in the art, all parts and percents herein are based on weight.

### Example 1

Ethylene polymerizations are carried out in a 48 cell automated, combinatorial multireactor (available from Symyx Technologies, Inc., and operated substantially according to US-A-6,306,658). All solvents are dried prior to use. Reactor conditions employed are an initial charge of 70 kPa (10 psig) H₂ with ethylene supplied continuously during the polymerization to provide a total reactor pressure of 0.7 MPa (100 psig). A standard MgCl₂ supported titanium containing Ziegler-Natta procatalyst composition prepared substantially according to the teachings of US-A-6,248,831, US-A-5,290,745, US-A-4,376,062 and US-A-4,293,673 is employed.

Standard reactions without a PCA are: 157 µl of a 0.05M solution of triisobutylaluminum (TIBA) in mixed alkanes solvent (Isopar E™, available from Exxon Chemicals Inc.) in an amount to provide Al/Ti molar ratio of 500/1, 5205µl of mixed alkanes, 138 µl (0.248 mg/ml) of a mixed alkanes slurry of the procatalyst, followed by a rinse of 500 µl of mixed alkanes.

Reactions with a PCA (PEEB) are: 157 µl of a 0.05M solution of triisobutylaluminum (TIBA) in mixed alkanes (calculated to provide an Al/Ti molar ratio of 500/1), 4516 µl of mixed alkanes, 189 µl of a 0.0025 M solution of PEEB in mixed alkanes (calculated to give a PCA/Ti ratio of 30/1) followed by 500 µl of mixed alkanes, and 138 µl (0.248 mg/ml) of a mixed alkanes slurry of the procatalyst, followed by 500 µl of mixed alkanes.

Polymerization is terminated by addition of CO₂ at the end of 3600 seconds or upon sensing a preset ethylene flow limit of approximately 150 percent of initial charge. Upon completion of polymerization, the reactors are vented to ambient pressure; the glass vials containing polymer are removed and devolatilized in a rotary evaporator at 25 °C for 16 hours. The polymer yields are determined by difference from the weights of the glass inserts before and after polymerization and devolatilization. Average results of two or three polymerizations are reported in Table 1 and depicted graphically in Figure 1.

**Table 1**

| Run | PEEB/Ti (mol/mol) | Temp. (°C) | Average Activity (kg/g procatalyst) |
|---|---|---|---|
| 1* | 0/1 | 70 | 6.33 |
| 2* | 0/1 | 80 | 11.32 |
| 3* | 0/1 | 90 | 14.83 |
| 4* | 0/1 | 100 | 12.73 |
| 5* | 0/1 | 110 | 2.09 |
| 6* | 0/1 | 120 | 1.33 |
| 7 | 30/1 | 70 | 8.14 |
| 8 | 30/1 | 80 | 12.65 |
| 9 | 30/1 | 90 | 10.60 |
| 10 | 30/1 | 100 | 5.38 |
| 11 | 30/1 | 110 | 1.22 |
| 12 | 30/1 | 120 | 0.74 |

| | | | |
|---|---|---|---|
| * Comparative, not an example of the invention | | | |

When the polymerization is conducted without a PCA, catalyst activity increases until about 90 °C and decays at temperatures above about 100 °C. With a PCA, the catalyst starts decaying at lower temperatures closer to 80 °C. At 100 °C, and especially at 110°C, the activity of the catalyst composition containing a PCA is significantly less than the activity of the catalyst composition lacking a PCA. The amount of heat generated from the exothermic polymerization reaction, especially at temperatures close to the polymer's softening point, is believed to contribute to polymer agglomeration and reactor continuity problems, such as sheeting, chunking, and fouling. Suppressing the catalyst activity at these higher temperatures can significantly reduce the heat generated, thus reducing the chance of agglomerate formation and reactor continuity problems.

## Claims

1. A process for the gas phase polymerization of ethylene comprising contacting ethylene with a catalyst composition comprising one or more Group 3-10 transition metal containing, Ziegler-Natta, procatalyst compounds; one or more alkylaluminum cocatalysts; and one or more polymerization control agents (PCA), selected from C₁₋₁₀ alkyl monoether derivatives of C₁₋₁₀ alkyl esters of benzoic acid, C₁₋₁₀ alkyl monoether derivatives of C₁₋₁₀ dialkyl esters of phthalic acid, and C₁₋₁₀ alkyl monoether derivatives of C₁₋₁₀ dialkyl esters of terephthalic acid,
wherein the polymerization temperature is greater than 85°C and
the PCA is present in a PCA:cocatalyst(s) molar ratio of 1:1 to 1:100.

2. A process according to claim 1 wherein the Ziegler-Natta procatalyst is selected from: TiCl₄, TiCl₃, Ti(OC₂H₅)₃Cl, Ti(OC₂H₅)₂Cl₂, Ti(OC₂H₅)₃Cl, Ti(OC₃H₇)Cl₃, Ti(OC₃H₇)₂Cl₂, Ti(OC₄H₉)Cl₃, Ti(OC₄H₉)₂Cl₂, TiCl₃·1/3AlCl₃, Ti(OC₁₂H₂₅)Cl₃, MgTi(OC₂H₅)₅Cl₁, MgTi(OC₂H₅)₄Cl₂, MgTi(OC₂H₅)₃Cl₃, MgTi(OC₂H₅)₂Cl₄, MgTi(OC₂H₅) Cl₅, MgCl₂·TiCl₄, and mixtures thereof.

3. A process according to claim 1 wherein the Ziegler-Natta procatalyst compound is TiCl₄ or TiCl₃ supported on MgCl₂.

4. A process according to any one of the preceding claims wherein the cocatalyst is a trialkylaluminum compound containing from 1-10 carbon atoms in each alkyl group.

5. A process according to claim 4 wherein the cocatalyst is triisobutylaluminum or triethylaluminum.

6. A process according to any one of the preceding claims which is a continuous, gas phase polymerization process.

7. A process according to any one of the preceding claims which is conducted in more than one reactor operating in series.

8. The process of claim 7, wherein the catalyst composition is added to only the first reactor of the series.

9. The process of claim 8 in which two reactors are used.

10. A process according to claim 1 wherein the polymerization control agent is ethyl p-ethoxybenzoate.

11. A process according to any one of the preceding claims wherein the procatalyst compound includes an internal electron donor.

## Patentansprüche

1. Ein Verfahren zur Gasphasenpolymerisation von Ethylen, beinhaltend das In-Kontakt-Bringen von Ethylen mit einer Katalysatorzusammensetzung, beinhaltend eine oder mehrere, Übergangsmetall der Gruppe 3-10 enthaltende Ziegler-Natta-Prokatalysatorverbindungen; einen oder mehrere Alkylaluminiumkatalysatoren; und ein oder mehrere Polymerisationssteuermittel (PCA), ausgewählt aus C₁₋₁₀-Alkylmonoetherderivaten von C₁₋₁₀-Alkylestern von Benzoesäure, C₁₋₁₀-Alkylmonoetherderivaten von C₁₋₁₀-Dialkylestern von Phthalsäure und C₁₋₁₀-Alkylmonoetherderivaten von C₁₋₁₀-Dialkylestern von Terephthalsäure,
wobei die Polymerisationstemperatur mehr als 85 °C beträgt und das PCA in einem Molverhältnis von PCA : Cokatalysator(en) von 1 : 1 bis 1 : 100 vorhanden ist.

2. Verfahren gemäß Anspruch 1, wobei der Ziegler-Natta-Prokatalysator aus Folgendem ausgewählt ist: TiCl₄, TiCl₃, Ti(OC₂H₅)₃Cl, Ti(OC₂H₅)₂Cl₂, Ti(OC₂H₅)₃Cl, Ti(OC₃H₇)Cl₃, Ti(OC₃H₇)₂Cl₂, Ti(OC₄H₉)Cl₃, Ti(OC₄H₉)₂Cl₂, TiCl₃·1/3AlCl₃, Ti(OC₁₂H₂₅)Cl₃, MgTi(OC₂H₅)₅Cl₁, MgTi(OC₂H₅)₄Cl₂, MgTi(OC₂H₅)₃Cl₃, MgTi(OC₂H₅)₂Cl₄, MgTi(OC₂H₅)Cl₅, M₉Cl₂·TiCl₄ und Mischungen davon.

3. Verfahren gemäß Anspruch 1, wobei die Ziegler-Natta-Prokatalysatorverbindung TiCl₄ oder TiCl₃, getragen auf MgCl₂, ist.

4. Verfahren gemäß einem der vorhergehenden Ansprüche, wobei der Cokatalysator eine Trialkylaluminiumverbindung ist, die in jeder Alkylgruppe 1-10 Kohlenstoffatome enthält.

5. Verfahren gemäß Anspruch 4, wobei der Cokatalysator Triisobutylaluminium oder Triethylaluminium ist.

6. Verfahren gemäß einem der vorhergehenden Ansprüche, das ein kontinuierliches Gasphasenpolymerisationsverfahren ist.

7. Verfahren gemäß einem der vorhergehenden Ansprüche, das in mehr als einem Reaktor ausgeführt wird, die in Reihe betrieben werden.

8. Verfahren gemäß Anspruch 7, wobei die Katalysatorzusammensetzung nur dem ersten Reaktor der Reihe zugegeben wird.

9. Verfahren gemäß Anspruch 8, bei dem zwei Reaktoren verwendet werden.

10. Verfahren gemäß Anspruch 1 , wobei das Polymerisationssteuermittel Ethyl-p-ethoxybenzoat ist.

11. Verfahren gemäß einem der vorhergehenden Ansprüche, wobei die Prokatalysatorverbindung einen internen Elektronendonator umfasst.

## Revendications

1. Un procédé pour la polymérisation en phase gazeuse d'éthylène comprenant la mise en contact d'éthylène avec une composition de catalyseurs comprenant un ou plusieurs métaux de transition des Groupes 3 à 10 contenant des composés procatalyseurs, de Ziegler-Natta ; un ou plusieurs cocatalyseurs alkylaluminium ; et un ou plusieurs agents de contrôle de polymérisation (PCA, Polymerization Control Agents), sélectionnés parmi des dérivés monoéthers alkyliques en C₁₋₁₀ d'esters alkyliques en C₁₋₁₀ d'acide benzoïque, des dérivés monoéthers alkyliques en C₁₋₁₀ d'esters dialkyliques en C₁₋₁₀ d'acide phtalique, et des dérivés monoéthers alkyliques en C₁₋₁₀ d'esters dialkyliques en C₁₋₁₀ d'acide téréphtalique,
où la température de polymérisation est supérieure à 85 °C et le PCA est présent dans un rapport molaire PCA/cocatalyseur(s) de 1/1 à 1/100.

2. Un procédé selon la revendication 1 où le procatalyseur de Ziegler-Natta est sélectionné parmi : TiCl₄, TiCl₃, Ti(OC₂H₅)₃Cl, Ti(OC₂H₅)₂Cl₂, Ti(OC₂H₅)₃Cl, Ti(OC₃H₇)Cl₃, Ti(OC₃H₇)₂Cl₂, Ti(OC₄H₉)Cl₃, Ti(OC₄H₉)₂Cl₂, TiCl₃·1/3AlCl₃, Ti(OC₁₂H₂₅)Cl₃, MgTi(OC₂H₅)₅Cl₁, MgTi(OC₂H₅)₄Cl₂, MgTi(OC₂H₅)₃Cl₃, MgTi(OC₂H₅)₂Cl₄, MgTi(OC₂H₅)Cl₅, MgCl₂·TiCl₄, et des mélanges de ceux-ci.

3. Un procédé selon la revendication 1 où le composé procatalyseur de Ziegler-Natta est TiCl₄ ou TiCl₃ supporté sur MgCl₂.

4. Un procédé selon n'importe laquelle des revendications précédentes où le cocatalyseur est un composé trialkylaluminium contenant de 1 à 10 atomes de carbone dans chaque groupe alkyle.

5. Un procédé selon la revendication 4 où le cocatalyseur est le triisobutylaluminium ou le triéthylaluminium.

6. Un procédé selon n'importe laquelle des revendications précédentes qui est un procédé de polymérisation en phase gazeuse, continue.

7. Un procédé selon n'importe laquelle des revendications précédentes qui est réalisé dans plus d'un réacteur fonctionnant en série.

8. Le procédé de la revendication 7, où la composition de catalyseurs est ajoutée seulement au premier réacteur de la série.

9. Le procédé de la revendication 8 dans lequel deux réacteurs sont utilisés.

10. Un procédé selon la revendication 1 où l'agent de contrôle de polymérisation est le p-éthoxybenzoate d'éthyle.

11. Un procédé selon n'importe laquelle des revendications précédentes où le composé procatalyseur inclut un donneur d'électrons interne.
